# EUROPEAN PATENT SPECIFICATION

(11) **EP 3 270 454 B1**
(45) Date of publication and mention of the grant of the patent: **01.07.2020**
(21) Application number: 16178995.3
(22) Date of filing: 12.07.2016
(51) Int. Cl.: H01M 10/48, G01K 1/02, G01K 3/14, G01K 7/24, H01M 10/42

(54) **BATTERY MODULE AND METHOD FOR MONITORING A BATTERY MODULE**
BATTERIEMODUL UND VERFAHREN ZUR ÜBERWACHUNG EINES BATTERIEMODULS
MODULE DE BATTERIE ET PROCÉDÉ DE SURVEILLANCE D'UN MODULE DE BATTERIE

(43) Date of publication of application: 17.01.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Riedmann, Matthias, 70188 Stuttgart (DE); Kohn, Peter, 70178 Stuttgart (DE); Hafenbrak, Robert, 70469 Stuttgart (DE); Greiner, Daniel Bernd, 72070 Tuebingen (DE); Wagner, Christian, 70469 Stuttgart (DE)
(74) Representative: Isarpatent

(56) References cited:
- EP-A1- 2 642 575
- DE-A1-102010 001 374
- US-A1- 2011 210 703
- US-A1- 2015 132 615

## Description

The present invention relates to a battery module and to a method for monitoring a battery module according to the preamble of independent claim 1 and 6, respectively, which are known from US 2011/210703 A1.

DE 10 2010 001 374 A1 discloses an energy storage device. The device includes a temperature sensor for sensing the temperature of single storage cells or groups of storage cells.

EP 2 642 575 A1 discloses a battery system and a method of operating the battery system including a monitoring device for determining whether battery groups enter an abnormal state.

US 2015/0132615 A1 discloses a battery pack and a method of managing a battery pack. A control unit determines whether or not temperature sensors provided in the battery pack are defective based on battery temperature data, and controls the battery module based on temperature values corresponding to temperature sensors determined not to be defective.

### State of the Art

Electrical energy can be stored by means of batteries. Batteries convert chemical energy into electrical energy. Particularly, rechargeable batteries are known to be able to be charged and discharged several times. Batteries or battery modules comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid electric vehicles (PHEV). Lithium ion battery cells may comprise one or more electrode assemblies.

Lithium ion battery cells have a positive electrode called cathode, and a negative electrode called anode. The anode and the cathode are divided from one another by means of a separator. The electrodes and the separator are surrounded by an electrolyte that is normally in liquid state. Both electrodes are connected to terminals of the battery cell by means of collectors. The battery cell can be charged and discharged through the terminals.

In a discharge process, electrons flow in an external circuit from the anode to the cathode, and lithium ions move within the battery cell from the anode to the cathode. In a charging process of the battery cell, the lithium ions move from the cathode to the anode. Thereby, the lithium ions are stored back into the active material of the anode reversibly.

For safe operation of a battery cell, it is necessary to monitor technical parameters of the battery cell. Said parameters include, inter alia, a voltage applied to the terminals, a current flowing through the battery cell, and a temperature of the battery cell. If the temperature of a battery cell is high, aging of the battery cell is accelerated. Furthermore, if the temperature in the battery cell is sufficiently high, a thermal runaway may occur, which may destroy the battery cell.

For measuring temperature of battery cells within a battery module, temperature sensors are provided within the battery module. The battery module may comprise a control unit to which the temperature sensors of the battery module are connected.

Document US 2011/0210703 A1 discloses a battery system comprising a plurality of battery cells. The battery system further comprises a plurality of temperature sensors that are connected to a control circuit. In particular, a NTC thermistor is provided which measures an average temperature of the battery cells.

Document US 2010/0193266 discloses a power supply apparatus provided with a plurality of electric storage devices. Separate PTC temperature detectors or NTC thermistors are provided for each electric storage devices to detect a temperature of each of the electric storage devices. If a temperature detected by a temperature detector is higher than a predetermined temperature, the respective electric storage device is switched off.

### Disclosure of the Invention

A battery module is provided, comprising a plurality of battery cells and a plurality of temperature sensors. Thereat, the battery cells of the battery module are connected electrically in series or in parallel.

According to the invention as defined in independent claim 1, several temperature sensors are connected electrically in a first sensor unit, and several temperature sensors are connected electrically in a second sensor unit. Thereat, a resistance of the first sensor unit is measurable separately from a resistance of the second sensor unit, and a resistance of the second sensor unit is measurable separately from a resistance of the first sensor unit.

Hence, all temperature sensors that are provided in the battery module can be considered when measuring an average temperature of all battery cells within the battery module. Thus, errors in measurement of a single temperature sensor are not considered substantially. Plausibility of measurement is improved by measuring two resistances of two separate sensor units independently.

According to of the invention, each battery cell of the battery module is equipped with one temperature sensor. Hence, each battery cell has a separate temperature sensor. Thus, the temperature of every single battery cell can be considered when measuring resistance of the sensor units.

Several battery cells or all of the battery cells of the battery module are arranged side by side. Thereat, each battery cell equipped with a temperature sensor of the first sensor unit is located adjacent to a battery cell equipped with a temperature sensor of the second sensor unit. Hence, the temperature sensors of the first sensor unit and the temperature sensors of the second sensor unit are arranged alternately.

According to a further development of the invention, the temperature sensors of the first sensor unit are connected in parallel. Also according to a further development of the invention, the temperature sensors of the second sensor unit are connected in parallel. Hence, the first sensor unit and the second sensor unit each appear as a single temperature sensor which allows measurement of an average temperature over all battery cells.

According to an advantageous embodiment of the invention, the temperature sensors have nonlinear characteristic. That means, the relationship between resistance and temperature of the temperature sensors is nonlinear. The characteristic of the temperature sensors is such that temperature rising about a certain range effects a bigger change of conductivity than temperature falling about the same range.

In particular, the temperature sensors are NTC-resistors. NTC (Negative Temperature Coefficient) resistors show the desired nonlinear characteristic of the temperature sensors.

According to the invention, the battery module comprises a control unit whereat the first sensor unit is connected to a first measuring channel of the control unit and the second sensor unit is connected to a second measuring channel of the control unit. When measuring different temperatures in the first measuring channel and in the second measuring channel, a maximum temperature within the battery module can be calculated by dint of a simple mathematical model which is implemented in the control unit.

Furthermore, a method for monitoring a battery module comprising a plurality of battery cells and a plurality of temperature sensors is provided as defined in independent claim 6. Therein, several temperature sensors are connected electrically in a first sensor unit, and several temperature sensors are connected electrically in a second sensor unit. Thereat, a resistance of the first sensor unit is measured separately from a resistance of the second sensor unit, and a resistance of the second sensor unit is measured separately from a resistance of the first sensor unit.

Thus, all temperature sensors that are provided in the battery module are considered when an average temperature of all battery cells within the battery module is measured. Thus, errors in measurement of a single temperature sensor are not considered substantially. Furthermore, plausibility of measurement is improved when two resistances of two separate sensor units are measured independently.

Advantageously, the temperature sensors of the first sensor unit are connected in parallel. Further advantageously, the temperature sensors of the second sensor unit are connected in parallel. Thus, when resistance of the first sensor unit and of the second sensor unit is measured, an average temperature over all battery cells is measured.

According to a further development of the invention, the temperature sensors have nonlinear characteristic, which means, that the relationship between resistance and temperature of the temperature sensors is nonlinear. The characteristic of the temperature sensors is such that temperature rising about a certain range is considered as a bigger change of conductivity than temperature falling about the same range.

Preferably, the temperature sensors are NTC-resistors because such NTC (Negative Temperature Coefficient) resistors show the desired nonlinear characteristic of the temperature sensors.

According to the invention, the battery module comprises a control unit whereat the resistance of the first sensor unit is measured via a first measuring channel of the control unit and the resistance of the second sensor unit is measured via a second measuring channel of the control unit. When different temperatures are measured in the first measuring channel and in the second measuring channel, a maximum temperature within the battery module is calculated by dint of a simple mathematical model that is implemented in the control unit.

A battery module according to the invention is usable advantageously in particular in an electric vehicle (EV), in a hybrid electric vehicle (HEV) or in a plug-in hybrid vehicle (PHEV). Also, a method for monitoring a battery module according to the invention is usable advantageously in particular in an electric vehicle (EV), in a hybrid electric vehicle (HEV) or in a plug-in hybrid vehicle (PHEV).

### Advantages of the Invention

The battery module according to the invention allows a relative exact temperature measurement with relative low cost. The temperature sensors, especially NTC-resistors, are cheap, and assembly of the temperature sensors on the battery cells is also cheap. In particular, only two measurement channels of a control unit are necessary to connect the temperature sensors. An average temperature of all battery cells within the battery module is measured. Furthermore, an upper limit of a temperature of a single battery cell can be estimated by dint of a mathematical model which can be implemented in the control unit of the battery module. In particular, a rise of temperature within a battery cell can be detected in short time.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell and
- Figure 2: a schematic view at a battery module comprising a plurality of battery cells and a plurality of temperature sensors shown in figure 1.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

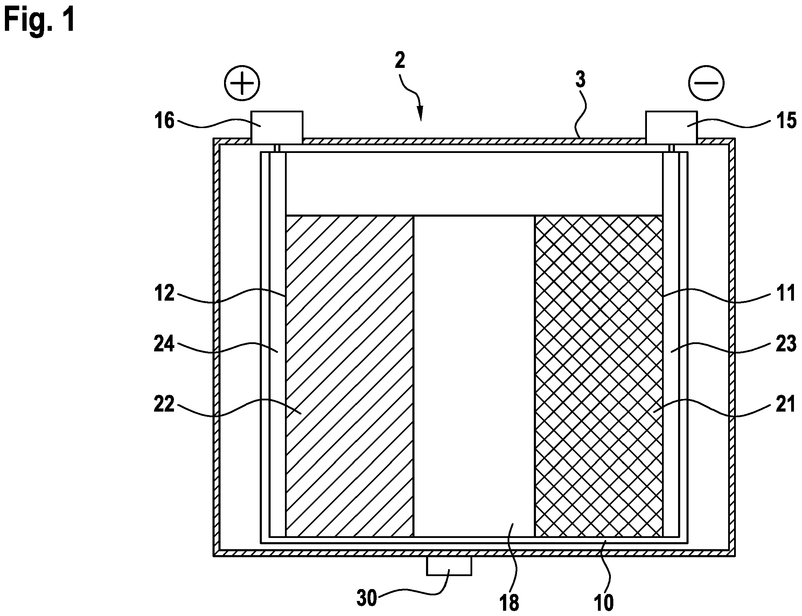

Figure 1 shows a schematic view at a battery cell 2. The battery cell 2 contains a housing 3 which has, for example, a prismatic shape. The battery cell 2 further contains an electrode assembly 10, which is arranged within the housing 3. The housing 3 is filled with a liquid electrolyte such that the electrode assembly 10 is impregnated by the electrolyte. The electrolyte is ion conductive.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

The anode 11 contains an anode active material 21 formed as a flat foil and an anode current collector 23 formed as a flat foil. The anode active material 21 and the anode current collector 23 are attached to one another. The anode current collector 23 is electrically conductive and is made of a metal, in particular of copper. The anode current collector 23 is electrically connected to the negative terminal 15 of the battery cell 2.

The cathode 12 contains a cathode active material 22 formed as a flat foil and a cathode current collector 24 formed as a flat foil. The cathode active material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

A temperature sensor 30 is mounted on the housing 3 of the battery cell 2. Presently, the temperature sensor 30 is a NTC resistor. The resistance of the temperature sensor 30 depends on the temperature of the temperature sensor 30 and hence on the temperature of the battery cell 2. The relationship between resistance and temperature of the temperature sensor 30 is nonlinear, that means the temperature sensor 30 has a nonlinear characteristic. The temperature sensor 30 is connectable, for example, to a control unit 60 via wires that are not shown here.

Alternatively, the temperature sensor 30 can be mounted inside the housing 3 of the battery cell 2. For example, the temperature sensor 30 can be placed at an inner wall of the housing 3 or can be inserted into the electrode assembly 10 of the battery cell 2. Such an arrangement of the temperature sensor 30 allows a more direct and more exact measurement of temperature of the battery cell 2. The wires for connecting the temperature sensor 30 for example stick out through a wall of the housing 3.

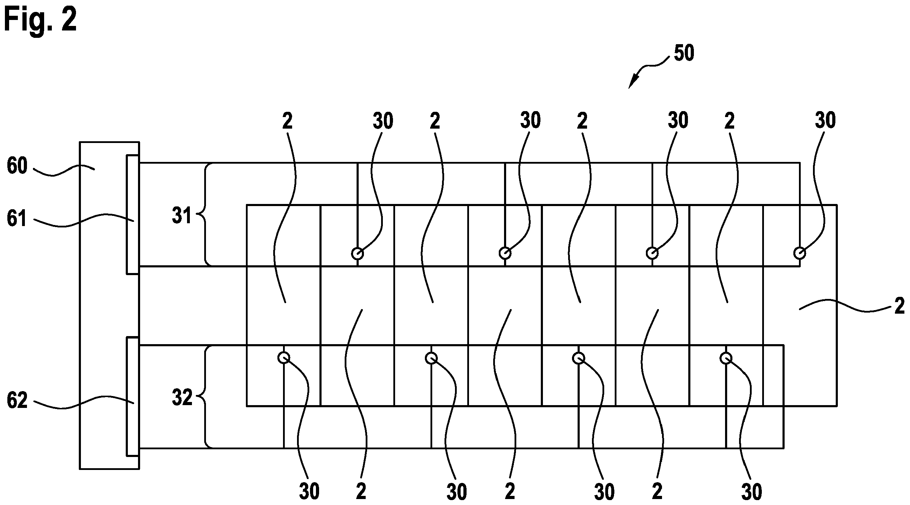

Figure 2 shows a schematic view at a battery module 50. The battery module 50 comprises a plurality of battery cells 2 and a plurality of temperature sensors 30 as shown in figure 1. The battery cells 2 of the battery module 50 are arranged side by side. The battery cells 2 may be in contact with a cooling plate that is not shown here.

Presently, the battery module 50 comprises eight battery cells 2 and respectively also comprises eight temperature sensors 30. However, other numbers of battery cells 2 and temperature sensors 30 are possible, too. Thereat, each of the battery cells 2 of the battery module 50 is equipped with exactly one temperature sensor 30.

Several temperature sensors 30 of the battery module 50 are connected electrically via wires in a first sensor unit 31. Also, several temperature sensors 30 of the battery module 50 are connected electrically via wires in a second sensor unit 32. The first sensor unit 31 and the second sensor unit 32 are electrically insulated from one another. Hence, a resistance of the first sensor unit 31 is measurable separately from a resistance of the second sensor unit 32, and a resistance of the second sensor unit 32 is measurable separately from a resistance of the first sensor unit 31.

The temperature sensors 30 of the first sensor unit 31 are connected electrically in parallel. The temperature sensors 30 of the second sensor unit 32 are also connected electrically in parallel. It would also be possible to connect the temperature sensors 30 of the first sensor unit 31 or the temperature sensors 30 of the second sensor unit 32 electrically in series.

The temperature sensors 30 for the first sensor unit 31 and for the second sensor unit 32 are chosen such that each battery cell 2 equipped with a temperature sensor 30 of the first sensor unit 31 is located adjacent to a battery cell 2 equipped with a temperature sensor 30 of the second sensor unit 32. Thus, the temperature sensors 30 of the first sensor unit 31 and the temperature sensors 30 of the second sensor unit 32 are arranged alternately on adjacent battery cells 2 of the battery module 50.

The battery module 50 also comprises a control unit 60 that serves for monitoring and controlling the battery module 50. The control unit 60 comprises, inter alia, a first measuring channel 61 and a second measuring channel 62 for connecting temperature probes. The first sensor unit 31 is connected to the first measuring channel 61 of the control unit 60 and the second sensor unit 32 is connected to the second measuring channel 62 of the control unit 60.

The resistance of the first sensor unit 31 is measured via the first measuring channel 61 of the control unit 60. The resistance of the second sensor unit 32 is measured via the second measuring channel 62 of the control unit 60. In the control unit 60, a mathematical model is implemented that checks plausibility of measurements. By dint of said mathematical model, also a maximum temperature of battery cells 2 within the battery module 50 is calculated when different temperatures are measured in the first measuring channel 61 and in the second measuring channel 62 of the control unit 60.

Typical errors that effect a rise of temperature of battery cells 2 are in particular increasing internal resistance within the battery cell 2, especially within the electrode assembly 10, or increasing resistance of terminal connectors that connect the terminals 15, 16 of different battery cells 2. A rise of temperature of a battery cell 2 is also caused when the battery cell 2 loses contact with the cooling plate.

Within the mathematical model, it can for example be assumed that in case of different temperature measurement by the two measuring channels 61, 62, one battery cell 2 has a higher temperature than the other battery cells 2. Said increased temperature of said battery cell 2 is normally effected by a typical error as described above. More complex models assuming specific temperature distributions are possible.

Different temperature measurement by the two measuring channels 61, 62 could also arise when one battery cell 2 of the battery module 50 has a lower temperature than the other battery cells 2. However, said case is not presumably in real operation of the battery module 50 and is therefore disregarded within the mathematical model.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery module (50), comprising:
a control unit (60),
a plurality of battery cells (2) arranged side by side connected electrically in series or in parallel, and
a first and second plurality of temperature sensors (30),
wherein the first plurality of temperature sensors (30) is connected electrically in a first sensor unit (31) that is connected to a first measuring channel (61) of the control unit (60), and the second plurality of temperature sensors (30) is connected electrically to a second sensor unit (32) that is connected to a second measuring channel (62) of the control unit (60),
wherein the control unit (60) is arranged to measure a resistance of the first sensor unit (31) separately from a resistance of the second sensor unit (32),
and wherein the first sensor unit and the second sensor unit appear each as a single temperature sensor configured to measure an average temperature,
**characterised in that**
a mathematical model is implemented in the control unit (60), wherein the mathematical model is configured for estimating an upper limit of a temperature of a single battery cell, and/or for checking the plausibility of the measured resistances, and/or for performing calculations based on an assumed specific temperature distribution,
the control unit (60) is arranged to calculate a maximum temperature within the battery module (50) by dint of said mathematical model, when the control unit (60) measures different temperatures in the first measuring channel (61) and in the second measuring channel (62), and
the first and second plurality of temperature sensors (30) are arranged such that each battery cell (2) is equipped with one temperature sensor (30) and the temperature sensors (30) of the first sensor unit (31) and the temperature sensors (30) of the second sensor unit (32) are arranged alternately on adjacent battery cells (2) of the battery module (50).

2. Battery module (50) according to claim 1, **characterised in that** the first plurality of temperature sensors (30) is connected in parallel, and/or the second plurality of temperature sensors (30) of the second sensor unit (32) are connected in parallel.

3. Battery module (50) according to claim 1, **characterised in that**
the first plurality of temperature sensors (30) is connected in series, and/or
the second plurality of temperature sensors (30) of the second sensor unit (32) are connected in series.

4. Battery module (50) according to one of the preceding claims, **characterised in that**
the temperature sensors (30) have nonlinear characteristic.

5. Battery module (50) according to one of the preceding claims, **characterised in that**
the temperature sensors (30) are NTC-resistors.

6. Method for monitoring a battery module (50), comprising
a control unit (60),
a plurality of battery cells (2) arranged side by side connected electrically in series or in parallel, and
a first and second plurality of temperature sensors (30),
wherein the first plurality of temperature sensors (30) is connected electrically in a first sensor unit (31)that is connected to a first measuring channel (61) of the control unit (60), and
the second plurality of temperature sensors (30) is connected electrically to a second measuring channel (62) of the sensor unit (32),
wherein a resistance of the first sensor unit (31) is measured via the first measuring channel (61) of the control unit (60) and a resistance of the second sensor unit (32) is measured via the second measuring channel (62) of the control unit (60),
and the resistance of the first sensor unit (31) is measured separately from the resistance of the second sensor unit (32),
and wherein the first sensor unit and the second sensor unit appear each as a single temperature sensor configured to measure an average temperature,
**characterised in that**
a mathematical model is implemented in the control unit (60), wherein the mathematical model is configured for estimating an upper limit of a temperature of a single battery cell, and/or for checking the plausibility of the measured resistances, and/or for performing calculations based on an assumed specific temperature distribution,
when different temperatures are measured in the first measuring channel (61) and in the second measuring channel (62),
a maximum temperature within the battery module (50) is calculated by dint of the mathematical model, and
the first and second plurality of temperature sensors (30) are arranged such that each battery cell (2) is equipped with one temperature sensor (30) and the temperature sensors (30) of the first sensor unit (31) and the temperature sensors (30) of the second sensor unit (32) are arranged alternately on adjacent battery cells (2) of the battery module (50).

7. Method according to one of claim 6, wherein
the first plurality of temperature sensors (30) of the first sensor unit (31) are connected in series, and/or the second plurality of temperature sensors (30) of the second sensor unit (32) are connected in series.

8. Method according to one of claims 6 or 7, wherein the temperature sensors (30) have nonlinear characteristic.

9. Method according to one of claims 6 to 8, wherein the temperature sensors (30) are NTC-resistors.

10. Usage of a battery module (50) according to one of claims 1 to 5 or of a method according to one of claims 6 to 8 in an electric vehicle (EV), in a hybrid electric vehicle (HEV) or in a plug-in hybrid vehicle (PHEV).

## Patentansprüche

1. Batteriemodul (50), umfassend:
eine Steuereinheit (60),
eine Vielzahl von nebeneinander angeordneten Batteriezellen (2), die elektrisch in Reihe oder parallel verbunden sind, und eine erste und eine zweite Vielzahl von Temperatursensoren (30),
wobei die erste Vielzahl von Temperatursensoren (30) elektrisch in einer ersten Sensoreinheit (31) verbunden ist, die mit einem ersten Messkanal (61) der Steuereinheit (60) verbunden ist, und die zweite Vielzahl von Temperatursensoren (30) elektrisch mit einer zweiten Sensoreinheit (32) verbunden ist, die mit einem zweiten Messkanal (62) der Steuereinheit (60) verbunden ist,
wobei die Steuereinheit (60) dazu eingerichtet ist,
einen Widerstand der ersten Sensoreinheit (31) getrennt von einem Widerstand der zweiten Sensoreinheit (32) zu messen,
und wobei die erste Sensoreinheit und die zweite Sensoreinheit jeweils als ein einzelner Temperatursensor erscheinen, der zum Messen einer Durchschnittstemperatur ausgelegt ist,
**dadurch gekennzeichnet, dass**
ein mathematisches Modell in der Steuereinheit (60) implementiert ist, wobei das mathematische Modell zum Schätzen einer oberen Grenze einer Temperatur einer einzelnen Batteriezelle und/oder zum Überprüfen der Plausibilität der gemessenen Widerstände und/oder zum Durchführen von Berechnungen auf der Grundlage einer angenommenen spezifischen Temperaturverteilung ausgelegt ist,
die Steuereinheit (60) dazu eingerichtet ist, eine maximale Temperatur innerhalb des Batteriemoduls (50) durch das mathematische Modell zu berechnen, wenn die Steuereinheit (60) unterschiedliche Temperaturen im ersten Messkanal (61) und im zweiten Messkanal (62) misst, und
die erste und die zweite Vielzahl von Temperatursensoren (30) derart angeordnet sind, dass jede Batteriezelle (2) mit einem Temperatursensor (30) ausgestattet ist und die Temperatursensoren (30) der ersten Sensoreinheit (31) und die Temperatursensoren (30) der zweiten Sensoreinheit (32) abwechselnd auf benachbarten Batteriezellen (2) des Batteriemoduls (50) angeordnet sind.

2. Batteriemodul (50) nach Anspruch 1, **dadurch gekennzeichnet, dass**
die erste Vielzahl von Temperatursensoren (30) parallel verbunden ist und/oder
die zweite Vielzahl von Temperatursensoren (30) der zweiten Sensoreinheit (32) parallel verbunden ist.

3. Batteriemodul (50) nach Anspruch 1, **dadurch gekennzeichnet, dass**
die erste Vielzahl von Temperatursensoren (30) in Reihe verbunden ist und/oder
die zweite Vielzahl von Temperatursensoren (30) der zweiten Sensoreinheit (32) in Reihe verbunden ist.

4. Batteriemodul (50) nach einem der vorhergehenden Ansprüche, **dadurch gekennzeichnet, dass**
die Temperatursensoren (30) eine nichtlineare Charakteristik aufweisen.

5. Batteriemodul (50) nach einem der vorhergehenden Ansprüche, **dadurch gekennzeichnet, dass**
die Temperatursensoren (30) NTC-Widerstände sind.

6. Verfahren zum Überwachen eines Batteriemoduls (50), umfassend
eine Steuereinheit (60),
eine Vielzahl von nebeneinander angeordneten Batteriezellen (2), die elektrisch in Reihe oder parallel verbunden sind, und eine erste und eine zweite Vielzahl von Temperatursensoren (30),
wobei die erste Vielzahl von Temperatursensoren (30) elektrisch in einer ersten Sensoreinheit (31) verbunden ist, die mit einem ersten Messkanal (61) der Steuereinheit (60) verbunden ist, und
die zweite Vielzahl von Temperatursensoren (30) elektrisch mit einem zweiten Messkanal (62) der Sensoreinheit (32) verbunden ist,
wobei ein Widerstand der ersten Sensoreinheit (31) über den ersten Messkanal (61) der Steuereinheit (60) gemessen wird und ein Widerstand der zweiten Sensoreinheit (32) über den zweiten Messkanal (62) der Steuereinheit (60) gemessen wird,
und der Widerstand der ersten Sensoreinheit (31) getrennt vom Widerstand der zweiten Sensoreinheit (32) gemessen wird,
und wobei die erste Sensoreinheit und die zweite Sensoreinheit jeweils als ein einzelner Temperatursensor erscheinen, der zum Messen einer Durchschnittstemperatur ausgelegt ist,
**dadurch gekennzeichnet, dass**
ein mathematisches Modell in der Steuereinheit (60) implementiert ist, wobei das mathematische Modell zum Schätzen einer oberen Grenze einer Temperatur einer einzelnen Batteriezelle und/oder zum Überprüfen der Plausibilität der gemessenen Widerstände und/oder zum Durchführen von Berechnungen auf der Grundlage einer angenommenen spezifischen Temperaturverteilung ausgelegt ist,
wenn im ersten Messkanal (61) und im zweiten Messkanal (62) unterschiedliche Temperaturen gemessen werden, eine maximale Temperatur innerhalb des Batteriemoduls (50) durch das mathematische Modell berechnet wird, und die erste und die zweite Vielzahl von Temperatursensoren (30) derart angeordnet sind, dass jede Batteriezelle (2) mit einem Temperatursensor (30) ausgestattet ist und die Temperatursensoren (30) der ersten Sensoreinheit (31) und die Temperatursensoren (30) der zweiten Sensoreinheit (32) abwechselnd auf benachbarten Batteriezellen (2) des Batteriemoduls (50) angeordnet sind.

7. Verfahren nach Anspruch 6, wobei
die erste Vielzahl von Temperatursensoren (30) der ersten Sensoreinheit (31) in Reihe verbunden ist und/oder die zweite Vielzahl von Temperatursensoren (30) der zweiten Sensoreinheit (32) in Reihe verbunden ist.

8. Verfahren nach einem der Ansprüche 6 oder 7, wobei
die Temperatursensoren (30) eine nichtlineare Charakteristik aufweisen.

9. Verfahren nach einem der Ansprüche 6 bis 8, wobei
die Temperatursensoren (30) NTC-Widerstände sind.

10. Verwendung eines Batteriemoduls (50) nach einem der Ansprüche 1 bis 5 oder eines Verfahrens nach einem der Ansprüche 6 bis 8 in einem Elektrofahrzeug (engl. Electric Vehicle, EV), in einem Hybrid-Elektrofahrzeug (engl. Hybrid Electric Vehicle, HEV) oder in einem Plug-in-Hybrid-Fahrzeug (engl. Plug-in Hybrid Electric Vehicle, PHEV).

## Revendications

1. Module de batterie (50), comprenant :
une unité de commande (60),
une pluralité de cellules de batterie (2) disposées côte à côte branchées électriquement en série ou en parallèle, et
une première et une deuxième pluralité de capteurs de température (30),
dans lequel la première pluralité de capteurs de température (30) est branchée électriquement dans une première unité de capteurs (31) qui est branchée à un premier canal de mesure (61) de l'unité de commande (60), et la deuxième pluralité de capteurs de température (30) est branchée électriquement à une deuxième unité de capteurs (32) qui est branchée à un deuxième canal de mesure (62) de l'unité de commande (60),
dans lequel l'unité de commande (60) est agencée pour mesurer une résistance de la première unité de capteurs (31) séparément d'une résistance de la deuxième unité de capteurs (32),
et dans lequel la première unité de capteurs et la deuxième unité de capteurs apparaissent chacune comme un seul capteur de température configuré pour mesurer une température moyenne,
**caractérisé en ce que**
un modèle mathématique est mis en œuvre dans l'unité de commande (60), le modèle mathématique étant configuré pour estimer une limite supérieure d'une température d'une cellule de batterie individuelle, et/ou pour vérifier la vraisemblance des résistances mesurées, et/ou pour effectuer des calculs basés sur une distribution de température spécifique supposée,
l'unité de commande (60) est agencée pour calculer une température maximale à l'intérieur du module de batterie (50) grâce audit modèle mathématique, quand l'unité de commande (60) mesure différentes températures dans le premier canal de mesure (61) et dans le deuxième canal de mesure (62), et
la première et la deuxième pluralité de capteurs de température (30) sont agencées de telle sorte que chaque cellule de batterie (2) est équipée d'un capteur de température (30) et les capteurs de température (30) de la première unité de capteurs (31) et les capteurs de température (30) de la deuxième unité de capteurs (32) sont disposés en alternance sur des cellules de batterie (2) adjacentes du module de batterie (50).

2. Module de batterie (50) selon la revendication 1, **caractérisé en ce que** la première pluralité de capteurs de température (30) est branchée en parallèle, et/ou la deuxième pluralité de capteurs de température (30) de la deuxième unité de capteurs (32) est branchée en parallèle.

3. Module de batterie (50) selon la revendication 1, **caractérisé en ce que** la première pluralité de capteurs de température (30) est branchée en série, et/ou la deuxième pluralité de capteurs de température (30) de la deuxième unité de capteurs (32) est branchée en série.

4. Module de batterie (50) selon une des revendications précédentes, **caractérisé en ce que** les capteurs de température (30) ont une caractéristique non linéaire.

5. Module de batterie (50) selon une des revendications précédentes, **caractérisé en ce que** les capteurs de température (30) sont des résistances CTN.

6. Procédé de surveillance d'un module de batterie (50), comprenant
une unité de commande (60),
une pluralité de cellules de batterie (2) disposées côte à côte branchées électriquement en série ou en parallèle, et
une première et une deuxième pluralité de capteurs de température (30),
dans lequel la première pluralité de capteurs de température (30) est branchée électriquement dans une première unité de capteurs (31) qui est branchée à un premier canal de mesure (61) de l'unité de commande (60), et
la deuxième pluralité de capteurs de température (30) est branchée électriquement à un deuxième canal de mesure (62) de l'unité de capteurs (32),
dans lequel une résistance de la première unité de capteurs (31) est mesurée par le biais du premier canal de mesure (61) de l'unité de commande (60) et une résistance de la deuxième unité de capteurs (32) est mesurée par le biais du deuxième canal de mesure (62) de l'unité de commande (60),
et la résistance de la première unité de capteurs (31) est mesurée séparément de la résistance de la deuxième unité de capteurs (32),
et dans lequel la première unité de capteurs et la deuxième unité de capteurs apparaissent chacune comme un seul capteur de température configuré pour mesurer une température moyenne,
**caractérisé en ce que**
un modèle mathématique est mis en œuvre dans l'unité de commande (60), le modèle mathématique étant configuré pour estimer une limite supérieure d'une température d'une cellule de batterie individuelle, et/ou pour vérifier la vraisemblance des résistances mesurées, et/ou pour effectuer des calculs basés sur une distribution de température spécifique supposée,
quand différentes températures sont mesurées dans le premier canal de mesure (61) et dans le deuxième canal de mesure (62),
une température maximale à l'intérieur du module de batterie (50) est calculée grâce au modèle mathématique, et la première et la deuxième pluralité de capteurs de température (30) sont agencées de telle sorte que chaque cellule de batterie (2) est équipée d'un capteur de température (30) et les capteurs de température (30) de la première unité de capteurs (31) et les capteurs de température (30) de la deuxième unité de capteurs (32) sont disposés en alternance sur des cellules de batterie (2) adjacentes du module de batterie (50).

7. Procédé selon la revendication 6, dans lequel la première pluralité de capteurs de température (30) de la première unité de capteurs (31) est branchée en série, et/ou la deuxième pluralité de capteurs de température (30) de la deuxième unité de capteurs (32) est branchée en série.

8. Procédé selon une des revendications 6 et 7, dans lequel les capteurs de température (30) ont une caractéristique non linéaire.

9. Procédé selon une des revendications 6 à 8, dans lequel les capteurs de température (30) sont des résistances CTN.

10. Utilisation d'un module de batterie (50) selon une des revendications 1 à 5 ou d'un procédé selon une des revendications 6 à 8 dans un véhicule électrique (EV), dans un véhicule électrique hybride (HEV) ou dans un véhicule hybride rechargeable (PHEV).
